# FASCICULE DE BREVET EUROPEEN

(11) **EP 2 173 953 B1**
(45) Date de publication et mention de la délivrance du brevet: **27.12.2017**
(21) Numéro de dépôt: 08805929.0
(22) Date de dépôt: 04.06.2008
(51) Int. Cl.: E05B 17/04, E05B 85/06, E05B 79/10

(54) **DISPOSITIF DE LIAISON ENTRE UN VERROU ET UNE SERRURE DE PORTE DE VEHICULE AUTOMOBILE**
VERBINDUNGSVORRICHTUNG ZUR HERSTELLUNG EINER VERBINDUNG ZWISCHEN DEM TÜRRIEGEL UND DEM TÜRVERSCHLUSS EINES MOTORFAHRZEUGS
CONNECTING DEVICE PROVIDING THE CONNECTION BETWEEN A MOTOR VEHICLE DOOR LATCH AND LOCK

(30) Priorité: 04.06.2007 FR 0703971
(43) Date de publication de la demande: 14.04.2010
(73) Titulaire: Renault S.A.S., 92100 Boulogne-Billancourt (FR)
(72) Inventeur: MERCIER, Sébastien, F-45300 Givraines (FR)
(86) Numéro de dépôt international: PCT/FR2008/050988
(87) Numéro de publication internationale: WO 2008/152327

(56) Documents cités:
- EP-A- 0 943 759
- EP-A- 1 079 048
- EP-A- 1 405 971
- EP-A- 1 416 109
- DE-U1- 29 822 913
- FR-A- 2 849 885
- US-A- 2 206 462
- US-A1- 2002 056 298

## Description

### Domaine technique de l'invention

L'invention concerne un dispositif de liaison entre un verrou et une serrure de porte de véhicule automobile, ledit dispositif transmettant directement un mouvement de rotation du verrou à la serrure et comportant un arbre de transmission, défini par un axe longitudinal et relié respectivement au verrou et à la serrure par une première extrémité longitudinale en butée et une seconde extrémité longitudinale coulissante.

L'invention s'applique plus particulièrement aux portes latérales de tous les types de véhicules automobiles.

### Etat de la technique

Dans une porte latérale de véhicule automobile, notamment en fonction de la place disponible et de l'encombrement résultant des équipements à installer dans la porte, il est nécessaire de tenir compte des difficultés d'agencement d'un verrou et d'un mécanisme de serrure associé. Plus particulièrement, il est souvent nécessaire de prévoir que la transmission directe du mouvement de rotation entre un rotor du verrou, ou tout autre organe rotatif de sortie de ce dernier, et un organe d'entrée du mécanisme de serrure puisse être assurée au moyen d'un élément intermédiaire de liaison et de transmission.

Classiquement, cet élément de liaison peut être un organe du type biellette, tringle ou encore arbre de transmission. Un tel élément de liaison permet alors l'entraînement angulaire sans jeu du mécanisme de serrure, auquel il peut transmettre des couples relativement importants. Or, les difficultés d'implantation du mécanisme et notamment de l'élément de liaison s'imposent d'autant plus lorsqu'il faut pouvoir transmettre le mouvement entre deux organes rotatifs, dont les axes ne sont pas alignés ni même parallèles.

Afin de remédier à ces inconvénients, le document EP 0 943 759 décrit notamment un agencement particulier d'un arbre de transmission, avec ses extrémités opposées liées en rotation par rapport aux organes rotatifs associés, respectivement du verrou et de la serrure, par un joint de transmission articulé. Celui-ci autorise un déplacement angulaire relatif entre l'axe de l'arbre de transmission et l'axe de rotation de l'organe rotatif correspondant, ainsi qu'un déplacement axial relatif.

Cependant, un tel déplacement axial relatif de l'arbre de transmission par rapport aux organes de sortie et d'entrée est générateur de bruits et d'usure et ne permet pas de monter l'arbre de transmission "en aveugle" par rapport à la serrure.

Le document FR 2 849 885 décrit également un autre type d'agencement d'un arbre de transmission entre un verrou et une serrure, ledit arbre de transmission comportant deux portions coulissantes l'une par rapport à l'autre et reliées par un ressort. Une première extrémité longitudinale de l'arbre de transmission est une extrémité en butée dans un orifice associé du verrou et une seconde extrémité longitudinale de l'arbre de transmission est une extrémité coulissante dans un orifice associé de la serrure.

Cependant, la fabrication d'un tel élément de liaison s'avère compliquée et coûteuse et son installation à l'intérieur d'une porte latérale de véhicule automobile, notamment en fonction de la position du verrou et de la serrure, reste problématique.

Finalement, un dispositif selon le préambule de la revendication 1 est connu du document EP 1 416 109.

### Objet de l'invention

L'invention a pour but de remédier à l'ensemble des inconvénients précités et a pour objet la réalisation d'un dispositif de liaison entre un verrou et une serrure d'une porte de véhicule automobile, qui puisse s'adapter à tout les types de verrous et de serrures de portes latérales, qui soit efficace d'un point de vue sécurité, tout en étant facile et rentable à fabriquer.

Le but de l'invention est atteint par les revendications annexées et, plus particulièrement, par le fait que l'arbre de transmission est complètement rigide et comporte une portion courbe, adjacente à l'extrémité coulissante de l'arbre de transmission, de sorte que l'arbre de transmission relie la serrure au verrou selon un angle d'inclinaison, correspondant à l'angle relatif entre un premier plan de référence, associé à ladite extrémité coulissante de l'arbre de transmission, et un deuxième plan de référence, sensiblement perpendiculaire audit axe longitudinal de l'arbre de transmission. D'autres avantages et caractéristiques de l'invention peuvent être considérées isolément ou en combinaison :
- La portion courbe de l'arbre de transmission comporte une encoche, de préférence avec une forme sensiblement concave, destinée à coopérer avec un cône d'avaloir de la serrure.
- La section de la portion courbe au niveau de l'encoche correspond sensiblement à la section minimale prédéterminée de l'arbre de transmission.
- La longueur de la portion courbe de l'arbre de transmission est de l'ordre de 20mm.
- L'extrémité coulissante de l'arbre de transmission est conformée en sphère d'articulation munie de trois plots radiaux s'étendant vers l'extérieur de la sphère et définissant ledit premier plan de référence de l'arbre de transmission.
- L'angle d'inclinaison délimité par lesdits premier et deuxième plans de référence est compris entre 20° et 22°.
- La course angulaire du verrou autour de l'axe longitudinal de l'arbre de transmission, d'une position de condamnation de la porte vers une position de décondamnation de la porte, est de l'ordre de 120°.
- L'arbre de transmission est rigide.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une vue en coupe du dispositif de liaison selon l'invention, représentant un arbre de transmission entre une serrure et un verrou d'une porte latérale de véhicule automobile.
Les figures 2 et 3 représentent respectivement une vue de face et une vue en perspective uniquement de l'arbre de transmission lié au verrou selon la figure 1.
La figure 4 est une vue de face agrandie de l'arbre de transmission selon les figures 1 à 3.
La figure 5 est une vue partielle agrandie d'une extrémité de l'arbre de transmission selon les figures 1 à 4.

### Description d'un mode particulier de réalisation

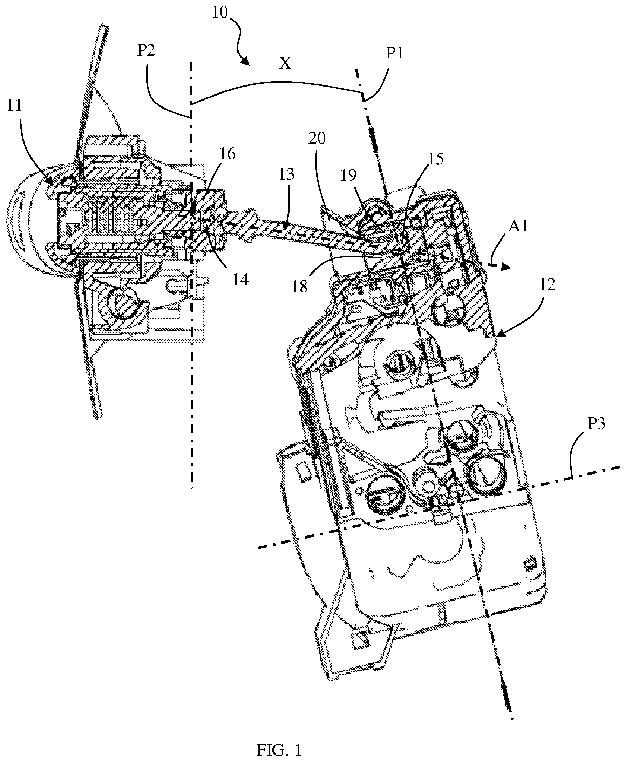

En référence aux figures 1 à 5, le dispositif de liaison 10 selon l'invention est plus particulièrement destiné à relier un verrou 11 et une serrure 12 d'une porte latérale de véhicule automobile. Le dispositif de liaison 10 comporte un arbre de transmission 13 complètement rigide, qui transmet directement le mouvement de rotation du verrou 11 à la serrure 12.

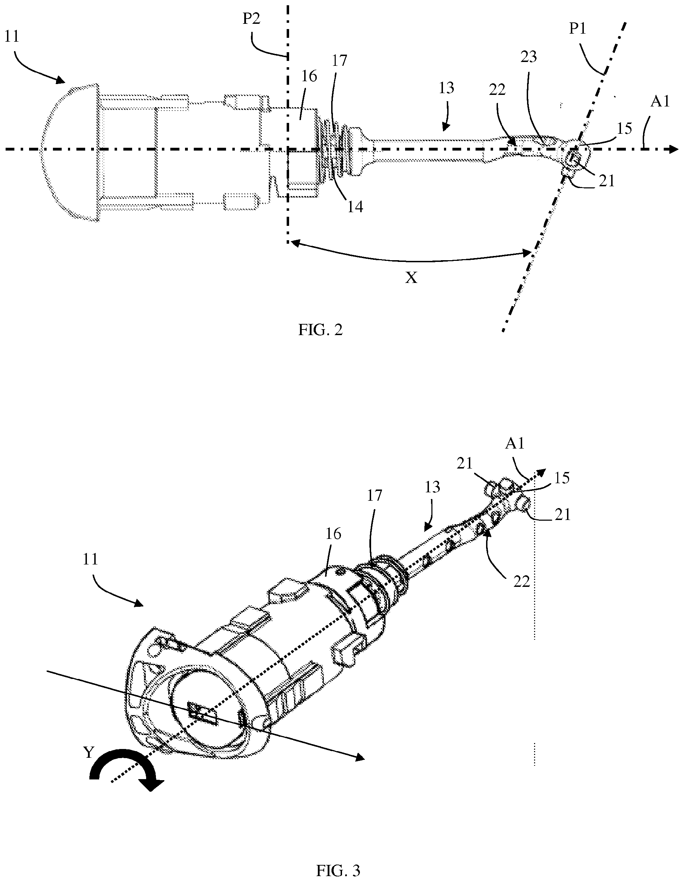

Sur les figures 1 et 2, l'arbre de transmission 13 est défini par un axe longitudinal A1, passant sensiblement par deux extrémités longitudinales 14, 15 de l'arbre de transmission 13. La première extrémité longitudinale 14 de l'arbre de transmission 13 est une extrémité en butée dans le verrou 11, plus particulièrement une extrémité en butée 14 reliée à un organe de sortie 16 du verrou 11 par une liaison du type rotule (figure 1). Comme représenté sur la figure 2, l'extrémité en butée 14 peut être associée avantageusement à un ressort de rappel 17, autorisant un léger jeu en translation le long de l'axe longitudinal A1 de l'arbre de transmission 13 par rapport à l'organe de sortie 16 du verrou 11 (figure 2).

La seconde extrémité longitudinale 15 de l'arbre de transmission 13 est une extrémité longitudinale coulissante à l'intérieur d'un organe d'entrée 18 de la serrure 12, reliée par une liaison du type rotule coulissante (figure 1). L'organe d'entrée 18 associé à l'arbre de transmission 13 comporte au moins une rainure 19, destinée à coopérer avec l'extrémité coulissante 15, comme décrit ci-après, et un cône d'avaloir 20, permettant notamment une introduction aisée de l'extrémité longitudinale coulissante 15 de l'arbre de transmission 13 dans l'organe d'entrée 18 de la serrure 12.

Dans le mode particulier de réalisation représenté sur les figures 2 à 5, l'extrémité coulissante 15 de l'arbre de transmission 13 est conformée en sphère d'articulation, munie de trois plots radiaux 21 s'étendant vers l'extérieur de la sphère et définissant plus particulièrement un premier plan de référence P1 (figures 1, 2 et 4). Les plots radiaux 21 sont notamment destinés à coulisser dans les rainures 19 correspondantes de l'organe d'entrée 18 de la serrure 12 (figure 1). Le premier plan de référence P1 défini par les plots radiaux 21 correspond donc sensiblement au plan de référence définissant l'orientation de la serrure 12 par rapport à la verticale.

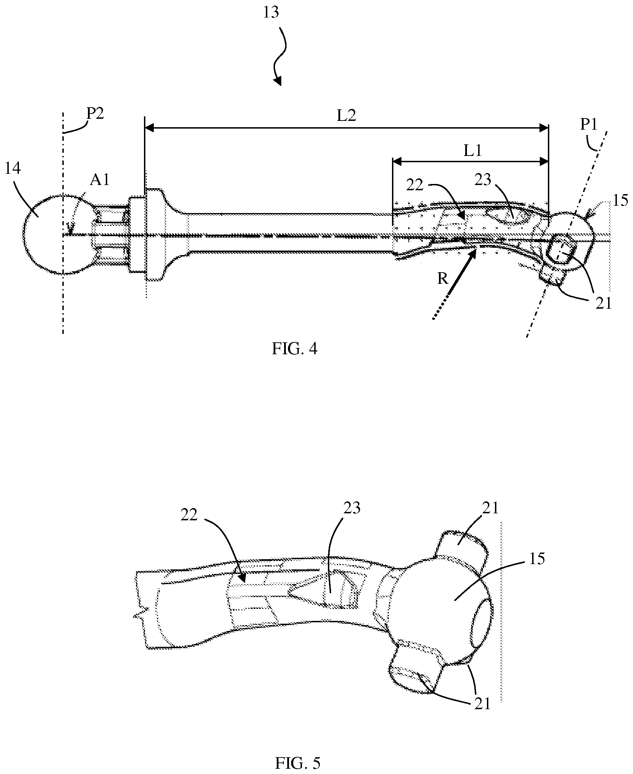

Sur les figures 2 à 5, l'arbre de transmission 13 comporte une portion courbe 22, adjacente à l'extrémité longitudinale coulissante 15 de l'arbre de transmission 13, destinée à être introduite dans l'organe d'entrée 18 de la serrure 12. Sur la figure 1, l'arbre de transmission 13 est représenté lié au verrou 11 et à la serrure 12, tandis que sur les figures 2 et 3 et sur les figures 4 et 5, l'arbre de transmission est représenté, respectivement, lié au verrou 11 et sans aucune liaison.

Comme représenté plus en détails sur les figures 2, 3 et 4, la portion courbe 22 de l'arbre de transmission 13 s'étend de la sphère d'articulation munie des plots radiaux 21, constituant l'extrémité coulissante 15 insérée dans la serrure 12, jusqu'à sensiblement un peu moins de la moitié de la longueur de l'arbre de transmission 13, selon l'axe longitudinal A1 (figure 2).

Par ailleurs, comme représenté sur les figures 1, 2 et 4, la portion courbe 22 de l'arbre de transmission 13 selon l'invention est telle que la plan de référence P1 défini ci-dessus est incliné, c'est-à-dire non parallèle, par rapport à un second plan de référence P2 sensiblement vertical, à savoir sensiblement perpendiculaire au sens d'introduction d'une clé dans le verrou 11 (figure 1). Sur la figure 2, le second plan de référence P2 est sensiblement perpendiculaire à l'axe longitudinal A1 de l'arbre de transmission 13.

Par ailleurs, comme représenté sur la figure 1, une telle portion courbe 22 de l'arbre de transmission 13 est positionnée au niveau de l'arbre de transmission 13, de sorte qu'elle permet notamment de pouvoir orienter la serrure 12 par rapport au verrou 11 d'un angle d'inclinaison X, correspondant à l'angle relatif entre les deux plans de référence P1 et P2, comme décrits ci-dessus (figures 1 et 2). Selon un mode de réalisation préférentiel de l'invention, l'angle d'inclinaison X est compris, de préférence, entre 20° et 22°.

A titre d'exemple, la longueur L1 de la portion courbe 22 (figure 4) est sensiblement de l'ordre de 20mm, pour une longueur L2 de l'arbre de transmission 13, sensiblement entre ses deux extrémités longitudinales 14, 15, de l'ordre de 50mm. D'une façon générale, la portion courbe 22 présente également un rayon de courbure R (figure 4) déterminé notamment en fonction de l'architecture de la porte et de la position relative du verrou 11 et de la serrure 12 dans la porte.

Un tel dispositif de liaison 10, avec un arbre de transmission 13 ayant une telle portion courbe 22, permet donc une implantation optimale du verrou 11 par rapport à la serrure 12 dans la porte latérale d'un véhicule. Un tel dispositif de liaison 10 permet d'installer les éléments de façon plus ou moins inclinée et plus ou moins rapprochée dans un même plan. Il en résulte un gain très important en termes de facilité de mise en oeuvre. Par ailleurs, un tel arbre de transmission 13 peut être utilisé pour tous les types de portes latérales de tous les types de véhicules.

De plus, comme représenté notamment sur la figure 3, un tel arbre de transmission 13 permet une rotation du verrou 11, selon l'axe longitudinal A1 de l'arbre de transmission 13, d'un angle de débattement Y de l'ordre de 120°, (figure 3). Plus particulièrement, l'arbre de transmission 13 peut effectuer une rotation de plus ou moins 56° autour de l'axe longitudinal A1, correspondant au passage d'une position de condamnation de la porte vers une position de décondamnation de la porte.

Par ailleurs, comme représenté plus en détails sur les figures 2, 4 et 5, l'arbre de transmission 13, plus particulièrement la portion courbe 22 de l'arbre de transmission 13, comporte une encoche 23, réalisée dans l'épaisseur de l'arbre de transmission 13. L'encoche 23 correspond sensiblement à une découpe de forme et de dimensions particulières, réalisée avantageusement au bord de la portion courbe 22, proche de la sphère d'articulation formant l'extrémité coulissante 15 de l'arbre de transmission 13. L'encoche 23 est notamment destinée à coopérer avec le cône d'avaloir 20 de l'organe d'entrée 18 de la serrure 12 (figure 1).

L'encoche 23 est, de préférence, de forme sensiblement concave, avec une section sensiblement en forme de goutte d'eau (figures 4 et 5). A titre d'exemple, la profondeur de l'encoche 23 dans la portion courbe 22 est de l'ordre de 1 mm à 2mm. D'une façon générale, la profondeur de l'encoche 23 est déterminée, de sorte que la section de la portion courbe 22 au niveau de l'encoche 23 correspond sensiblement à la section minimale prédéterminée de l'arbre de transmission 13. Ladite section minimale de l'arbre de transmission 13 est notamment calculée en fonction de la matière et du couple de transmission associés au verrou 11 et à la serrure 12 correspondants.

Comme représenté sur la figure 1, l'encoche 23 réalisée sur la portion courbe 22 de l'arbre de transmission 13 permet notamment un positionnement et une adaptation parfaite de l'arbre de transmission 13 entre le verrou 11 et la serrure 12. L'encoche 23 permet notamment de pouvoir déplacer la serrure 12, lors de son installation, de plus ou moins 3mm le long du plan de référence P1, comme représenté sur la figure 1, et de plus ou moins 3mm le long d'un troisième plan de référence P3, comme représenté sur la figure 1, perpendiculaire au plan de référence P1.

Ainsi, quel que soit le mode de réalisation du dispositif de liaison 10 selon l'invention, la modification principale dans l'environnement de la portière, matérialisée par la remontée ou la descente de la serrure 12 par rapport au verrou 11, grâce notamment à la portion courbe 22 de l'arbre de transmission 13 et à l'encoche 23, permet ainsi de s'adapter à tous les types de véhicules. Il en résulte notamment un gain important en termes d'outillages, du fait qu'il n'est plus nécessaire de créer un outillage spécifique pour chaque nouveau véhicule, et en termes de mise en place, grâce notamment à l'angle d'inclinaison X possible entre le verrou 11 et la serrure 12.

L'invention n'est pas limitée au mode de réalisation décrit ci-dessus. La forme et les dimensions de l'arbre de transmission 13, de la portion courbe 22 et de l'encoche 23, ainsi que les valeurs de l'angle d'inclinaison X et de l'angle de débattement Y, sont non limitatives et dépendent notamment de la taille et de la position du verrou 11 et de la serrure 12.

## Revendications

1. Dispositif de liaison (10) entre un verrou (11) et une serrure (12) de porte de véhicule automobile, ledit dispositif (10) étant apte à transmettre directement un mouvement de rotation du verrou (11) à la serrure (12) et comportant un arbre de transmission (13), défini par un axe longitudinal (A1) et relié respectivement au verrou (11) et à la serrure (12) par une première extrémité longitudinale (14) en butée et une seconde extrémité longitudinale (15) coulissante, **dispositif caractérisé en ce que** l'arbre de transmission (13) est complètement rigide et comporte une portion courbe (22), adjacente à l'extrémité coulissante (15) de l'arbre de transmission (13), de sorte que l'arbre de transmission (13) relie la serrure (12) au verrou (11) selon un angle d'inclinaison (X), correspondant à l'angle relatif entre un premier plan de référence (P1), associé à ladite extrémité coulissante (15) de l'arbre de transmission (13), et un deuxième plan de référence (P2), sensiblement perpendiculaire audit axe longitudinal (A1) de l'arbre de transmission (13).

2. Dispositif selon la revendication 1, **caractérisé en ce que** la portion courbe (22) de l'arbre de transmission (13) comporte une encoche (23), destinée à coopérer avec un cône d'avaloir (20) de la serrure (12).

3. Dispositif selon la revendication 2, **caractérisé en ce que** l'encoche (23) a une forme sensiblement concave.

4. Dispositif selon l'une des revendications 2 et 3, **caractérisé en ce que** la section de la portion courbe (22) au niveau de l'encoche (23) correspond sensiblement à la section minimale prédéterminée de l'arbre de transmission (13).

5. Dispositif selon l'une quelconque des revendications 1 à 4, **caractérisé en ce que** la longueur (L1) de la portion courbe (22) de l'arbre de transmission (13) est de l'ordre de 20mm.

6. Dispositif selon l'une quelconque des revendications 1 à 5, **caractérisé en ce que** l'extrémité coulissante (15) de l'arbre de transmission (13) est conformée en sphère d'articulation munie de trois plots radiaux (21) s'étendant vers l'extérieur de la sphère et définissant ledit premier plan de référence (P1) de l'arbre de transmission (13).

7. Dispositif selon l'une quelconque des revendications 1 à 6, **caractérisé en ce que** l'angle d'inclinaison (X) délimité par lesdits premier (P1) et deuxième (P2) plans de référence est compris entre 20° et 22°.

8. Dispositif selon l'une quelconque des revendications 1 à 7, **caractérisé en ce que** la course angulaire (Y) du verrou (11) autour de l'axe longitudinal (A1) de l'arbre de transmission (13), d'une position de condamnation de la porte vers une position de décondamnation de la porte, est de l'ordre de 120°.

9. Dispositif selon l'une quelconque des revendications 1 à 8, **caractérisé en ce que** l'arbre de transmission (13) est rigide.

## Patentansprüche

1. Verbindungsvorrichtung (10) zwischen einem Türriegel (11) und einem Türschloss (12) eines Kraftfahrzeugs, wobei die Vorrichtung (10) geeignet ist, direkt eine Drehbewegung des Riegels (11) auf das Schloss (12) zu übertragen, und umfassend eine Übertragungswelle (13), die durch eine Längsachse (A1) definiert und mit dem Riegel (11) bzw. dem Schloss (12) durch ein erstes Längsende (14) am Anschlag und ein zweites gleitendes Längsende (15) verbunden ist, wobei die Vorrichtung **dadurch gekennzeichnet ist, dass** die Übertragungswelle (13) völlig starr ist und einen gekrümmten Abschnitt (22) umfasst, der an das gleitende Ende (15) der Übertragungswelle (13) angrenzt, so dass die Übertragungswelle (13) das Schloss (12) mit dem Riegel (11) entlang eines Neigungswinkels (X) entsprechend dem relativen Winkel zwischen einer ersten Referenzebene (P1), die dem gleitenden Ende (15) der Übertragungswelle (13) zugeordnet ist, und einer zweiten Referenzebene (P2), die im Wesentlichen auf die Längsachse (A1) der Übertragungswelle (13) senkrecht ist, verbindet.

2. Vorrichtung nach Anspruch 1, **dadurch gekennzeichnet, dass** der gekrümmte Abschnitt (22) der Übertragungswelle (13) eine Kerbe (23) umfasst, die dazu bestimmt ist, mit einem Einlaufkegel (20) des Schlosses (12) zusammenzuwirken.

3. Vorrichtung nach Anspruch 2, **dadurch gekennzeichnet, dass** die Kerbe (23) eine im Wesentlichen konkave Form hat.

4. Vorrichtung nach einem der Ansprüche 2 und 3, **dadurch gekennzeichnet, dass** der zweite gekrümmte Abschnitt (22) im Bereich der Kerbe (23) im Wesentlichen dem vorbestimmten Mindestquerschnitt der Übertragungswelle (13) entspricht.

5. Vorrichtung nach einem der Ansprüche 1 bis 4, **dadurch gekennzeichnet, dass** die Länge (L1) des gekrümmten Abschnitts (22) der Übertragungswelle (13) ungefähr 20 mm beträgt.

6. Vorrichtung nach einem der Ansprüche 1 bis 5, **dadurch gekennzeichnet, dass** das gleitende Ende (15) der Übertragungswelle (13) als Gelenkkugel ausgebildet ist, die mit drei radialen Flächen (21) versehen ist, die sich außerhalb der Kugel erstrecken und die erste Referenzebene (P1) der Übertragungswelle (13) definieren.

7. Vorrichtung nach einem der Ansprüche 1 bis 6, **dadurch gekennzeichnet, dass** der Neigungswinkel (X), der von der ersten (P1) und zweiten Referenzebene (P2) begrenzt ist, zwischen 20° und 22° beträgt.

8. Vorrichtung nach einem der Ansprüche 1 bis 7, **dadurch gekennzeichnet, dass** der Winkelhub (Y) des Riegels (11) um die Längsachse (A1) der Übertragungswelle (13) von einer Verriegelungsposition der Tür zu einer Entriegelungsposition der Tür ungefähr 120° beträgt.

9. Vorrichtung nach einem der Ansprüche 1 bis 8, **dadurch gekennzeichnet, dass** die Übertragungswelle (13) starr ist.

## Claims

1. Connecting device (10) providing the connection between a motor vehicle door latch (11) and lock (12), said device (10) being able to transmit a rotational movement of the latch (11) directly to the lock (12) and having a transmission shaft (13) defined by a longitudinal axis (A1) and connected to the latch (11) and to the lock (12) by a first abutting longitudinal end (14) and by a second sliding longitudinal end (15) respectively, said device being **characterized in that** the transmission shaft (13) is completely rigid and has a curved portion (22) adjacent to the sliding end (15) of the transmission shaft (13), such that the transmission shaft (13) connects the lock (12) to the latch (11) at an angle of inclination (X) corresponding to the relative angle between a first reference plane (P1) associated with said sliding end (15) of the transmission shaft (13) and a second reference plane (P2) which is substantially perpendicular to said longitudinal axis (A1) of the transmission shaft (13).

2. Device according to Claim 1, **characterized in that** the curved portion (22) of the transmission shaft (13) has a notch (23) intended to engage with a throat cone (20) of the lock (12).

3. Device according to Claim 2, **characterized in that** the notch (23) has a substantially concave form.

4. Device according to either of Claims 2 and 3, **characterized in that** the cross section of the curved portion (22) at the notch (23) corresponds substantially to the predetermined minimum cross section of the transmission shaft (13).

5. Device according to any one of Claims 1 to 4, **characterized in that** the length (L1) of the curved portion (22) of the transmission shaft (13) is around 20 mm.

6. Device according to any one of Claims 1 to 5, **characterized in that** the sliding end (15) of the transmission shaft (13) has the shape of an articulation ball provided with three radial studs (21) extending out from the ball and defining said first reference plane (P1) of the transmission shaft (13).

7. Device according to any one of Claims 1 to 6, **characterized in that** the angle of inclination (X) delimited by said first (P1) and second (P2) reference planes is between 20° and 22°.

8. Device according to any one of Claims 1 to 7, **characterized in that** the angular travel (Y) of the latch (11) about the longitudinal axis (A1) of the transmission shaft (13) from a door locked position to a door unlocked position is around 120°.

9. Device according to any one of Claims 1 to 8, **characterized in that** the transmission shaft (13) is rigid.
